Europäisches Patentamt

European Patent Office

Office européen des brevets

(19)

(11) EP 0 711 939 A2

(12) EUROPEAN PATENT APPLICATION

(43) Date of publication:
15.05.1996 Bulletin 1996/20

(51) Int Cl.6: **F16K 1/30**, F16K 41/04

(21) Application number: 95830352.1

(22) Date of filing: 02.08.1995

(84) Designated Contracting States:
DE FR GB IT

(30) Priority: 03.08.1994 IT BO940382

(71) Applicant: **Comelli, Giordano**
**I-43100 Parma (IT)**

(72) Inventor: **Comelli, Giordano**
**I-43100 Parma (IT)**

(54) **Device for storing and releasing compressed fluids**

(57)     In order to define the applications of the device invented, it is worth mentioning that numberless types of fluids are compressed and stored in cylinders, to be used as physical and/or chemical elements with required characteristics and/or to use the energy deriving from their pressurization. This invention is a device or system meant to store a fluid and release it according to required procedures, including extremely quick discharge. Different required features can be obtained in accordance with the characteristics and proportioning od the components of the device.

FIGURA 02

## Description

The invention will be referred to as "the device" or "a cylinder-valve integrated system" or "the system" . It can be used with compressed gases in their gaseous or diphasic gaseous-fluid state, with chemically dishomogeneous mixtures of fluids and gases, with substances suspended in fluids, with mixtures in general. The content of the device will be termed "fluid".

Pre-existing technical devices are characterised by two units: a simple small cylinder and a manually operated two-way valve with an 'open' and a 'closed' position. The cylinder and the valve are distinct units; the former is meant to contain the fluid, the latter to release it.

Cylinders are usually made of steel or a light alloy and obtained through the forging of pipes or metal sheets as well as welding and threading processes. Valves are usually made of steel or smelted brass, and the components are obtained by means of mechanical processing.

I will distinguish such valves as opening valves and tearing valves ; in different situations and using different proportions you can obtain different ways of liquid release. Opening valves, in which one or more movable components shift so as to create an opening for the release of the fluid, can be reused after each operation. The components keep the compressed fluid tight by means of rubber or elastomer packing. Tearing valves use a membrane whose tearing provoked by a sharp component causes the release of fluid; a new membrane has to be fitted in each time the valve is reused.

The innovative geometry of the new device to be considered can be applied to large-size cylinder-valve systems, to complex systems and plants, to multi-way, valves, to repeated opening valves and to a large number of apparatuses and plants that make use of compressed gases or fluids.

Now follows the description of the cylinder-valve integrated system which constitues the device under scrutiny. Such description is accompanied by three tables : table no. 01 consists of two drawings, table no. 02 consists of three drawings and table no. 03 consists of two.

Table no. 1 represents a model of the device basic geometry. Drawing 01 in Table 01 represents a sectional view of the device in its ready-to-discharge position. Drawing 02 in Table 01 gives a sectional view of the device in its discharge-effected position.

Tables 02 and 03 refer to different possibilities concerning the implementation of some of the system components or of the system itself.

Drawing 03 in Table 02 represents two orthogonal views of a model of the elements that hold back the operating shaft (d) and prevent its movement downwards. Such elements are meant to obtain a high discharge speed of the fluid by means of a cable-operated complete and irreversible distance actuation; (in the view from below detailed elements described with letters i and 1 have not been represented for the sake of clarity). Drawing 04 in Table 02 represents a model of the elements that hold back the operating shaft (d) and prevent its movement downwards in a device version suitable to obtain slow discharge through the loosening of a bolt. Drawing 05 in Table 02 represents a variation in the dimensioning of the shaft upper end (d), meant to obtain a slow fluid discharge. Drawing 06 in Table 03 represents a sectional view of a device variation where the opening occurs through upwards translation of the shaft (d). Drawing 07 in Table 03 represents the case in which the cylinder-valve integrated system is reduced to a spontaneous-opening valve because of very small inner volumes.

The expressions "downwards", "upwards", "upper end" and "lower end" found in the description, refer to the position of the sectional views of the drawings in the tables; moreover, 'upwards' means the movement from the fluid towards the user and 'downwards' is the movement from the fluid towards the operational section.

The details illustrated in the tables are: cylinder body (a), cylinder plug (b), packing between cylinder and plug (c), shaft (d), shaft packings on upper end (e), shaft packings on lower end (f), schematized elements preventing shaft translation ( g), small disc(h), washer (i), seger (l), pin (m), operational cable (n), shaft stroke (o), disc hole (p), compressed fluid (q), shaft projection ( r), spring (s), opening bolt (t), valve body (u), and cylinder (v).

In the device we can distinguish fixed elements (always still with regard to the cylinder and its components) and movable elements (they undergo some sort of motion during the system opening): fixed elements are marked by letters a, b, c, i, l, m, u, v, whereas movable elements are marked by letters d, e, f, g, h, n, p, r, s, t. Elements marked by letters d, e, f and r, undergo a translation in the required direction of the device axis along a distance called stroke (o); the schematized element (g) moves on a plane perpendicular to the device axis; the small disc (h) and its hole (p) rotate around the axis of the pin (i); the operational cable has a sliding motion inside a sheathing (not represented in the tables); the bolt (t) has a rototranslation along the thread; the.spring (s) extends through the stroke (o).

What follows is the description of the dynamics of the device depletion as referred to the device basic geometry represented in Table 01 and equipped with components meant to obtain a high discharge speed of the fluid by means of a cable-operated complete and irreversible distance actuation, as, represented in Drawing 02 from Table 03.

By pulling the actuation cable (n), the disc (h) is forced to rotate round the pin (m); when, during the rotation of the disc, the hole(p) corresponds to the shaft axis (d), the latter will be able to translate downwards, pushed by the pressure of the compressed fluid (q) and/or the spring (s). The shaft (d) will move downwards up to the point where its projection (r)is halted by the body of the cylinder (a) and its upper end will separate from the cylinder plug (b) and free the flow of the compressed fluid (q) which will be released towards the user.

A difference in the upper and lower sections of the shaft (d) will produce a pressure force on the shaft itself, directed from inside towards the larger section, which makes the shaft translate in that direction. The extent of such force is as follows:

$$F = \text{pressure} \times (\text{larger section area} - \text{smaller section area}).$$

Such force depends on the fluid pressure (affected by the temperature), on its chemical identity and, with regards to diphasic mixtures, on the cylinder filling factor. You can notice that the extent of such force can be limited when compared to each of its components, which are equal to : (pressure x larger area), or to :(pressure x smaller area); therefore the device operational stress will be limited. Such force can be backed by a spring (s) of suitable size and with a well-defined weight: the force exerted on the shaft will be constant.

The geometry of the components can be modified according to the applications required for the use of the device so far described.

The design of the device may be affected by different specifications according to the achievement of some or of all the features, as follows: - lower weight, - lower volume, - lower overall dimensions (both longitudinally and/or transversally), - lower number of components, - use of low-cost materials, - use of low-specific-weight components, - use of simpler and more inexpensive production -run components, - use of lathe-manufactured components, - low cost of such components, - high discharge section of the compressed fluid, - attainment of the highest discharge speed, - attainment of low actuation force in relation to the inner pressure and to the high section of the discharge. -attainment of the highest transferable power during the discharge, - attainment of required discharge speed, - attainment of one complete and irreversible actioning, - attainment of slow discharge, etc.

The presence, shape and size of each component af the device, the chemical composition and pressure of the fluid compressed, are the physical, geometrical and chemical parameters that can be altered, thus varying the design specifications.

Im detail, changes can affect: the shape and size of the cylinder (a) and of its plug (b), the geometry and dimensions of the components holding the shaft (d), the shape of the upper part of the shaft by the first upper packing (e) (see an example in drawing 05), the thickness of the cylinder plug (b) in contact with the upper section of the shaft, the shaft diameters (d) in the upper and lower section, the possible use of a spring (s), its size and weight; the quality of the tighteness surfaces and the amount of the frictions generated on them; the number and quality of the packings and their tighteness, the pressure of the fluid and its physical state, its density and possible different phases; the type of elements (g) used to hold the shaft: alla the above-mentioned parameters influence directly the mode and speed ofthe fluid discharge.

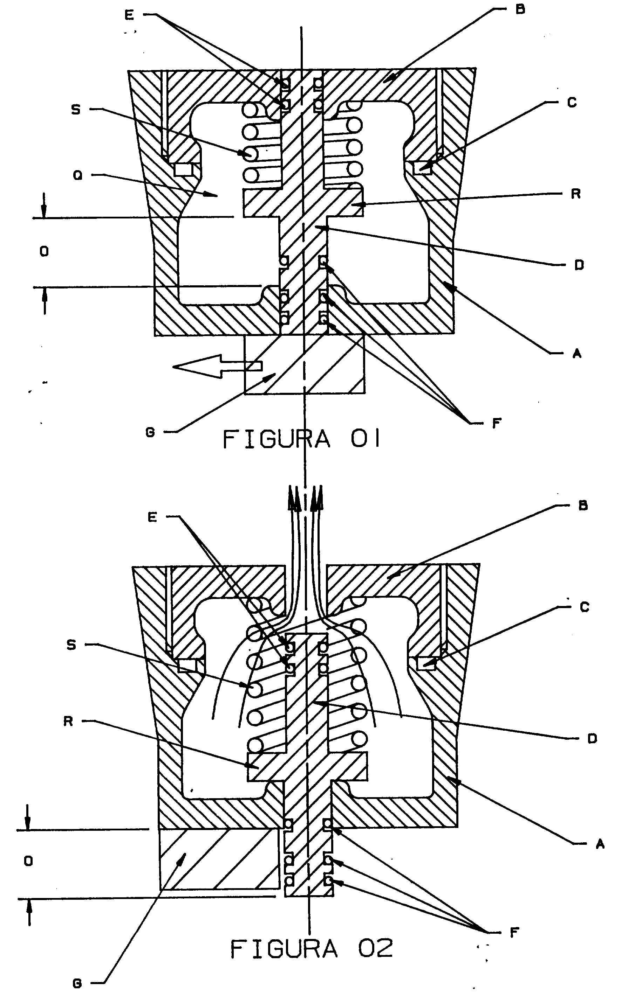

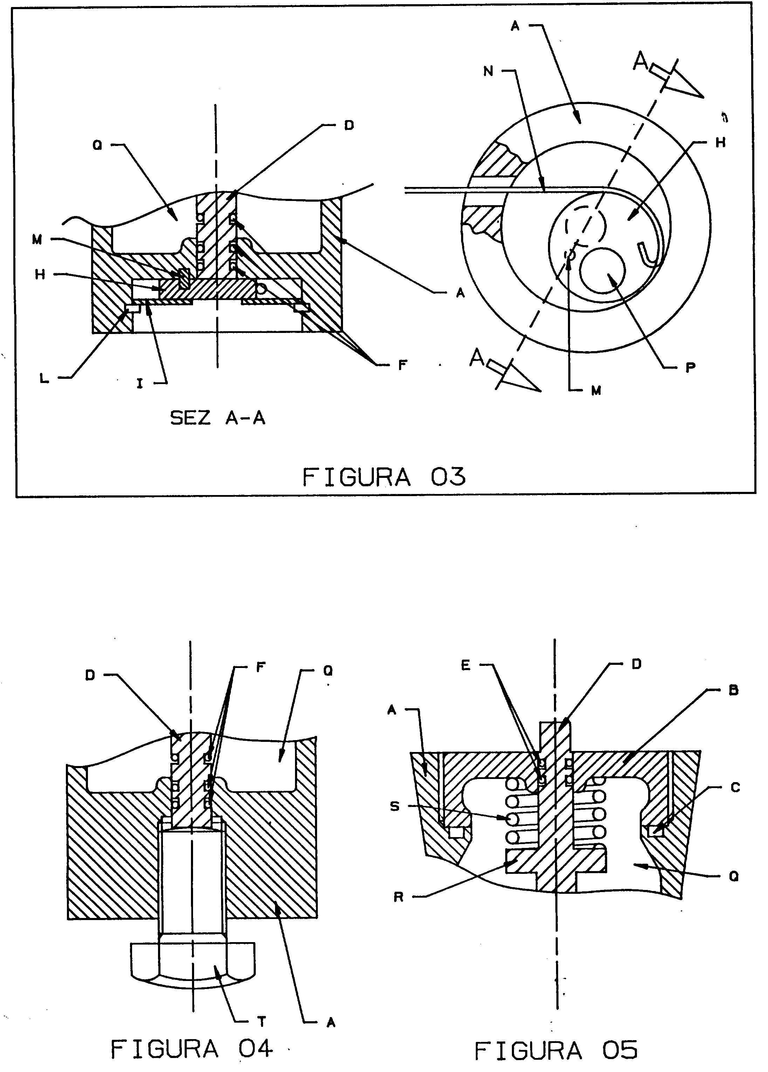

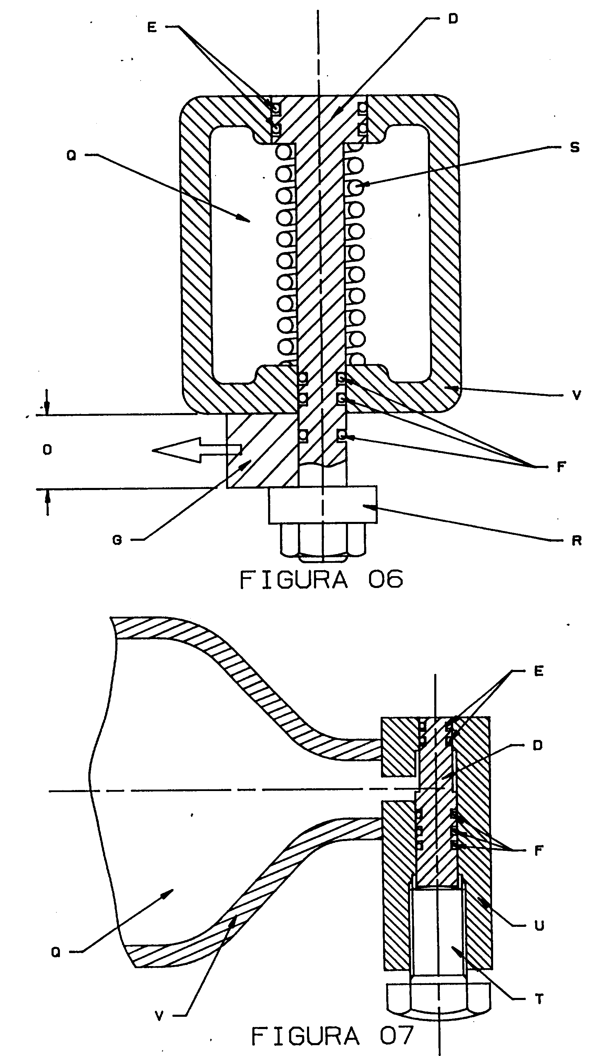

## Claims

1. Device meant to store and release a fluid, to be applied to different apparatuses and plants characterised by the fact that all the components are integrated within innovative geometry, where the cylinder (a), which consists of one or more parts (b), has got at least two holes located on the opposite sides (preferably on the flat bottoms of the cylinder), referred to as operational side and side of the user , and inside it houses an element called shaft (d) (which consists of one or more parts, connected with one or more j oints), so that the above-mentioned holes represent its prismatic guide and are blocked up by the shaft in its ready-to-discharge position;

2. Device according to claim 1, characterized by the fact that the shaft (d) and the holes mentioned before have circular sections (or of a different shape) and an area which can be the same (or different) at the operational side and side of the user, with packings that are responsible for the tightness of the fluid; seals can be O-rings (e, f) installed according to the scheme found in all the drawings, in such a number and position as to ensure the static tightness of at least 2 O-rings at the same time, in the ready-to-discharge position of the device and, during the shaft translation, the dynamic tightness of at least one packing on the operational side (drawings 1 and 2);

3. Device according to claim 2, characterized by the fact that, according to the proportioning of the areas (as described before), the shaft (d) receives from the compressed fluid (q) a thrust which is null in case the two areas are equal, or of a required amount with axial motion along a determined direction (see all drawings) when the areas are different from each other and a spring (s) can be placed in such a way as to exert a constant auxiliary force on the shaft (d); in such configuration it is possible to obtain the opening of the device with low stress. The resulting thrust on the shaft by the fluid pressure (q) is positive downwards in drawings 1, 2, 3, 4, 5 and 7, and positive upwards in drawing 6;

4. Device according to claim 3, characterized by the fact that the above-mentioned system, with the addition of a locking element sketched in drawings 1, 2 and 6 (letter g) and with compressed fluid ( q) inside, represents a temporary system with a free isostatic balance (because of the particular loading conditions), which works as follows: when you remove the blocking element (g) on the operational side, the shaft (d) translates under the thrust as described before, and,at the side of the user, it unblocks a hole of the cylinder (a) or of its parts (b), which will be an outlet for the fluid (q) which will be realeased because of the different outside pressure.; the projection (r) will halt the shaft against the cylinder (a) or one of its parts (drawings 1, 2, 5 and 6); moreover, this projection will enable the spring (s) to exert its force (drawings 1, 2 and 5) and it will enable the holding elements (drawing 6, letter g) to cling to the shaft. As a result of the geometry used, the opening of the device can be effected through shaft translations upwards (drawings 1, 2, 3, 4, 5 and 7) or downwards (drawing 8). The system so far described assumes that the shaft (a) and its parts (b) are fixed and the shaft (d) is mobile; it works in the same way with fixed shaft and mobile cylinder;

5. Device according to claim 4, characterized by the fact that the elements (g, h, i, l) holding the shaft (d) and preventing its motion downwards ( drawings 1, 2, 3, 4 and 7) or upwards (drawing 6) can consist of simple and inexpensive components such as a prism, a block, a wedge, a plug, a pivot, a bush, a bearing, a screw, etc., and that by removing or shifting such elements the opening of the device will occur; modes and speed of fluid discharge will change and depend on the geometry of such elements;

6. Device according to claim 5, characterized by the fact that the elements described in point 5 can consist of a small disc (h) held by a washer (i) and a seger (l) rotating on the axis of a pin (m); by applying a distance pull by means of a cable (n) partially rolled up the edge of such disc, it will rotate and when the disc hole corresponds to the shaft (d) , the latter will translate under the thrust of the compressed fluid (q) and of the spring (s) (when used), thus opening the device; in this way (or others), the geometry of these elements attains one complete and irreversible actioning;

7. Device according to claim 6, characterized by the fact that the outer section of the first seal in the upper end of the shaft (d) can be shaped so as to allow limited fluid outlet and thus suitable for a slow discharge (drawing 5);

8. Device according to anyone of the preceding claims, characterized by the fact that the configuration VALVE-CYLINDER-USER (linear or axial) is attained, and not CYLINDER-VALVE-USER, which offers new installation options, with smaller overall dimensions than in existing systems, where the valve is made with 90 -degree fastenings, thus enabling access to operations in a large number of plants and apparatuses;

9. Device according to anyone of the preceding claims, characterized by the fact that the geometry of the device can be varied in accordance with the attainment of one , some or all of the following features: - smaller overall dimensions, -smaller longitudinal and/or transversal size, - lower weight, - small number of components. - use of low-cost materials, -use of low-specific-weight components. -use of simpler and more inexpensive production-run components, -use of components obtained through economical lathe-manufacturing, - low cost of components, - attainment of low actuation force in relation to the inner pressure and discharge section, - attainment of a high section of compressed fluid discharge (q). -attainment of maximum discharge speed, -attainment of required discharge speed, - attainment of maximum instantaneous power transferable to the discharge, -attainment of one, complete and irreversible discharge;

10. Device according to claim 1, characterized by the fact that the cylinder (a) and its parts present the holes (described before) not on its opposite sides but in other positions and that by using more complex building techiques concerning shape and/or number of components of the integrated system a favourabler distribution of geometry is attained, as described before;

11. Device according to anyone of the preceding claims, characterized by the fact that, by adopting a more reduced inside volume of the system and by storing the fluid inside a cylinder (v) with suitable connecting elements, the integrated system described so far is reduced to a traditional valve, with special functions and features (drawing ).

E

B

S

C

Q

R

O

D

A

G

F

## FIGURA O1

E

B

S

C

R

D

A

O

F

G

## FIGURA O2

SEZ A-A

FIGURA 03

FIGURA 04

FIGURA 05

FIGURA 06

FIGURA 07